# EUROPEAN PATENT SPECIFICATION

(11) **EP 4 460 153 B1**
(45) Date of publication and mention of the grant of the patent: **11.06.2025**
(21) Application number: 24156211.5
(22) Date of filing: 07.02.2024
(51) Int. Cl.: H05B 6/44, H05B 6/10, H01M 10/04, H05B 6/36

(54) **INDUCTION HEATING DEVICE, METHOD FOR MANUFACTURING ELECTRODE ASSEMBLY INCLUDING THE SAME, AND APPARATUS FOR MANUFACTURING ELECTRODE ASSEMBLY INCLUDING THE SAME**
INDUKTIONSHEIZVORRICHTUNG, VERFAHREN ZUR HERSTELLUNG EINER ELEKTRODENANORDNUNG DAMIT UND VORRICHTUNG ZUR HERSTELLUNG EINER ELEKTRODENANORDNUNG DAMIT
DISPOSITIF DE CHAUFFAGE PAR INDUCTION, PROCÉDÉ DE FABRICATION D'UN ENSEMBLE D'ÉLECTRODES LE COMPRENANT ET APPAREIL DE FABRICATION D'UN ENSEMBLE D'ÉLECTRODES LE COMPRENANT

(30) Priority: 04.05.2023 KR 20230058195
(43) Date of publication of application: 06.11.2024
(73) Proprietor: LG ENERGY SOLUTION, LTD., Seoul 07335 (KR)
(72) Inventor: KIM, Jong Seok, Daejeon 34122 (KR); KIM, Yong Nam, Daejeon 34122 (KR)
(74) Representative: BCKIP Part mbB

(56) References cited:
- EP-B1- 3 422 435
- KR-A- 20230 046 461
- KR-B1- 102 082 912
- KR-B1- 102 265 236

## Description

### CROSS-REFERENCE TO RELATED APPLICATIONS

This application claims the benefit of priority to Korean Patent Application No. 10-2023-0058195 filed in the Korean Intellectual Property Office on May 04, 2023.

### TECHNICAL FIELD

The present invention relates to an induction heating device, a method for manufacturing an electrode assembly using the same, and an apparatus for manufacturing an electrode assembly including the same.

### BACKGROUND ART

Unlike a primary battery, a secondary battery can be recharged and may be formed in a small size or for a large capacity. Accordingly, a lot of research and development on secondary batteries are currently in progress. Along with the technology development and the increase in demand for mobile devices, the demand for secondary batteries as an energy source is sharply increasing.

Secondary batteries are classified into coin type batteries, cylindrical type batteries, prismatic type batteries, and pouch type batteries according to a shape of a battery case. In a secondary battery, an electrode assembly mounted inside a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator therebetween are sequentially stacked, and a stack and folding-type electrode assembly in which stack-type unit cells are wound with a separation film having a long length.

Here, in the stack and folding-type electrode assembly, the separator is folded and stacked in a zigzag form, and the positive electrode or the negative electrode is inserted between folds of the separator. As a result, an electrode assembly in which the positive electrode, the separator, and the negative electrode are stacked is manufactured.

In this process, in order to bond the electrodes and the separator to each other, heat and pressure are applied to the stack in which the positive electrode, the separator, and the negative electrode are stacked.

However, it takes a long time and a lot of energy to bond the electrodes (positive electrode, negative electrode) and the separator in the stack by applying heat and pressure to the stack.

When applying heat and pressure to the stack, there is a problem in that heat and pressure cannot be uniformly applied regardless of the stacked positions of the electrodes and separator due to difference in stacked positions (stacked heights) of the electrodes and separator in the stack. That is, there occurs a problem in that adhesive force between the separator and the electrodes is not constant.

As a result, there is a problem that performance of the electrode assembly is not uniform.

In order to solve the problem, a method of inductively heating a stack including an electrode and a separator has been considered. However, due to a shape of a coil used for induction heating, it is difficult to secure a desired level of uniformity in temperature.

Accordingly, it is necessary to devise an induction heating coil with a shape for securing temperature uniformity.

### Citation List

### Patent Literature

Korean Patent Application Publication No. 10-2013-0132230

Also document KR 102 265 236 B1 discloses an induction heating device for being used in manufacturing an electrode assembly according to the prior art.

### SUMMARY OF THE INVENTION

The present invention has been made in an effort to provide an induction heating device for solving a problem caused due to non-uniform adhesive force, a method for manufacturing an electrode assembly using the same, and an apparatus for manufacturing an electrode assembly including the same.

The afore-mentioned objects of the present invention are achieved by the features defined in independent claims. Further preferred features are set forth in dependent claims.

An exemplary embodiment of the present invention provides an induction heating device for being used in manufacturing an electrode assembly. The device comprises at least one induction heating plate with a thickness, having a major surface thereof formed along its length and width, wherein the at least one induction heating plate is adapted to perform an induction heating on an electrode assembly including a positive electrode, a negative electrode, and a separator arranged between the positive electrode and the negative electrode; and an induction heating coil built in the induction heating plate. The induction heating coil comprises: a first part extending at a first predetermined depth along the thickness direction of the induction heating plate, forming a meandering serpentine pattern, and a second part extending along a periphery of the induction heating plate at a second predetermined depth along the thickness direction of the induction heating plate.

The major surface of the at least one induction heating plate may be disposed to face the electrode assembly to be induction-heated.

The first part and the second part of the induction heating coil may run parallel with the major surface of the induction heating plate.

The at least one induction heating plate may comprise a first induction heating plate configured to have the electrode assembly placed thereon. The at least one induction heating plate may further comprise a second induction heating plate disposed opposite to the first induction heating plate such that the electrode assembly can be interposed between the first and the second induction heating plate.

The first predetermined depth and the second predetermined depth may be different, and the induction heating coil may further comprise a third part connecting the first and the second part.

The first and the second predetermined depth may be equal.

The second part of the induction heating coil may be arranged to, when viewed in the thickness direction perpendicular to the major surface of the at least one induction heating plate, tangentially meet a radially outward curve of the first part of the induction heating coil.

When viewed in the thickness direction perpendicular to the major surface of the at least one induction heating plate, the second part of the induction heating coil may surround the first part of the induction heating coil.

When viewed in the thickness direction perpendicular to the major surface of the at least one induction heating plate, the induction heating coil may have at least one closed loop.

The at least one induction heating plate may comprise a non-conductive material.

A radially outward curve of the first part of the induction heating coil may have a semi-elliptical shape. The semi-elliptical shape may have a long radius in the width direction of the induction heating plate and a short radius in the longitudinal direction of the induction heating plate. The long radius may be 50 mm or longer and 80 mm or shorter. The short radius may be 10 mm or longer and 40 mm or shorter.

The radially outward curve may periodically repeat along the longitudinal direction of the induction heating plate.
The repeating period may be 10 mm or greater and 30 mm or less.

Another exemplary embodiment of the present invention provides a method for manufacturing an electrode assembly comprising a first electrode, a separator, and a second electrode. The method comprises: stacking a stack comprising the first electrode, the separator, and the second electrode on a stack table; performing induction heating by inductively heating the stack with the induction heating device; and heating and pressing the inductively heated stack.

Still another exemplary embodiment of the present invention provides an electrode assembly manufacturing apparatus for manufacturing an electrode assembly comprising a first electrode, a separator, and a second electrode. The electrode assembly manufacturing apparatus comprises: a stack table configured to have the first electrode, the separator, and the second electrode stacked thereon; a heating and pressing unit configured to heat and press the stack; and an induction heating unit including the induction heating device. The induction heating unit may be configured to inductively heat the stack before heating and pressing the stack by the heating and pressing unit.

The induction heating device according to the exemplary embodiment of the present invention can evenly transfer heat in the process of manufacturing an electrode assembly, thereby reducing temperature non-uniformity.

The induction heating device according to the exemplary embodiment of the present invention has advantages in terms of process because it can be applied to electrode assemblies of various sizes.

The electrode assembly manufacturing method and the electrode assembly manufacturing apparatus according to the exemplary embodiments of the present invention can shorten the time required to manufacture the electrode assembly.

Since the electrode assembly manufacturing method and the electrode assembly manufacturing apparatus according to the exemplary embodiments of the present invention can easily adjust a temperature of the electrode to a specific temperature range to reduce a temperature deviation between the electrodes, it is possible to provide an electrode assembly with uniform performance.

The electrode assembly according to the exemplary embodiment of the present invention has a small air permeability deviation of the separator depending on the position, and therefore, has the advantage of uniform performance.

### BRIEF DESCRIPTION OF THE DRAWINGS

FIG. 1 is a view illustratively showing an induction heating unit of the related art.
FIG. 2 is a view showing a heat transfer pattern of an electrode assembly manufactured using the induction heating unit of the related art.
FIGS. 3 and 4 are views illustratively showing an induction heating unit according to an exemplary embodiment of the present invention.
FIG. 5 is a view showing a heat transfer pattern and an adhesive force pattern of an electrode assembly manufactured using an induction heating unit according to an exemplary embodiment of the present invention.
FIG. 6 is a plan view illustratively showing an electrode assembly manufacturing apparatus according to an exemplary embodiment of the present invention.
FIG. 7 is a front view showing a concept of the electrode assembly manufacturing apparatus according to the exemplary embodiment of the present invention.
FIG. 8 is a cross-sectional view illustratively showing a general electrode assembly.
FIGS. 9 and 10 are views illustratively showing processes of applying an electrode assembly manufacturing method or using an electrode assembly manufacturing apparatus according to an exemplary embodiment of the present invention.
FIG. 11(a) is a perspective view showing a first heating and pressing unit according to an exemplary embodiment of the present invention, and FIG. 11(b) is a perspective view showing a second heating and pressing unit according to an exemplary embodiment of the present invention.

### DETAILED DESCRIPTION

Hereinafter, exemplary embodiments of the present invention will be described in detail such that one skilled in the art to which the present invention belongs can readily implement the same. However, the present invention may be embodied in various different forms, and is not limited to the configurations described herein.

When one part "includes", "comprises" or "has" one constituent element in the present specification, unless otherwise specifically described, this does not mean that another constitutional element is excluded, but means that another constitutional element may be further included.

In an exemplary embodiment of the present invention, the electrode assembly may be stacked in such a form that the first electrode and the second electrode are alternately arranged between folds of a folded separator. In other words, a portion of the separator is interposed in-between the alternately stacked first and second electrodes.

In the present disclosure, the stacking form in which the first electrode and the second electrode are alternately arranged between folds of the folded separator is referred to as zigzag stacking.

More specifically describing, the folded separator may mean a separator that is stacked on top of itself in an overlapping manner by being folded multiple times in a zigzag form. More specifically, the separator may have a stacking axis along which the stacking advances while portions thereof being stacked one on top of the other, having the separator folded in a zigzag form alternately from the left side of the stacking axis to the right side of the stacking axis, and vice versa. Further, according to the stacking, the first electrode and the second electrode may be alternately arranged between folds of the stacked separator. Here, the stacking axis refers to a virtual axis, in which direction the first electrode, the separator, and the second electrode are stacked. The stacking axis may pass through a center of the stack including the electrodes and the separator.

That is, the configuration that the first electrode and the second electrode are alternately arranged between folds of the separator means that separator portions are stacked one on top of the other in a direction of the stacking axis while the separator being folded in a zigzag form. Herein, the first electrode and the second electrode may be alternately inserted one by one in respective spaces created by the folded separator (i.e., between the separator portions stacked on each other).

### <Induction Heating Device>

An exemplary embodiment of the present invention provides an induction heating device including an induction heating coil. An induction heating device according to an exemplary embodiment of the present invention may include an induction heating coil and an induction heating plate.

The induction heating device according to the present invention may have such a feature that when the induction heating plate is seen from above, a first part of the induction heating coil has a meandering serpentine pattern, and a second part of the induction heating coil is arranged across the first part of the induction heating coil while being arranged on a plane different from the first part of the induction heating coil.

In an exemplary embodiment of the present invention, the first part of the induction heating coil and the second part of the induction heating coil may be arranged on planes at different depths (e.g., along the thickness direction of the induction heating plate) from each other and connected to each other by a third part of the induction heating coil. In this case, the first part of the induction heating coil and the second part of the induction heating coil may be integrally formed while being connected by the third part of the induction heating coil. The above feature makes it possible to optimize induction heating for the electrode assembly. Optimizing the induction heating means that a heat transfer pattern, i.e., a mark, which is generated because a certain part of an electrode assembly is relatively more heated, is not generated and the electrode assembly can be uniformly heated.

The induction heating device according to an exemplary embodiment of the present invention may be used for manufacture of an electrode assembly.

In an exemplary embodiment of the present invention, the induction heating plate may include a first induction heating plate on which an electrode assembly including a positive electrode, a negative electrode, and a separator arranged between the positive electrode and the negative electrode is to be placed. The induction heating plate may further include a second induction heating plate corresponding to the first induction heating plate. The second induction heating plate may be disposed opposite to the first induction heating plate such that the electrode assembly can be interposed between the first and the second induction heating plate. In this case, the first induction heating plate may be referred to as a lower heating plate, and the second induction heating plate may be referred to as an upper induction heating plate.

In the induction heating device according to an exemplary embodiment of the present invention, at least one of the first induction heating plate and the second induction heating plate may have an induction heating coil built therein. Both the first induction heating plate and the first induction heating plate may respectively have an induction heating coil built therein.

In another embodiment of the present invention, the second part of the induction heating coil may be arranged on the same plane as the first part of the induction heating coil, in other words, at an identical depth (e.g**.,** along the thickness direction of the induction heating plate). The second part, however, may be avoided so as not to be short-circuited with the first part of the induction heating coil. That is, the second part may be positioned adjacent to the first part while avoiding physical contact with the first part on the same plane.

In an exemplary embodiment of the present invention, when the second part of the induction heating coil is arranged on the same plane as the first part of the induction heating coil, the first part and the second part are continuous with each other. That is, the first part and the second part are connected.

In an exemplary embodiment of the present invention, a third part of the induction heating coil connecting the first part and the second part of the induction heating coil may be further included. When seen in a plan view, the second part of the induction heating coil may tangentially meet a radially outward curve of the first part of the induction heating coil. That is, the induction heating coil may have a two-layer structure of an upper layer and a lower layer. Here, the upper layer may correspond to a layer on which the first part of the induction heating coil is arranged, and the lower layer may correspond to a layer on which the second part of the induction heating coil is arranged.

An exemplary embodiment of the present invention provides an induction heating device including: a lower induction heating plate having one surface on which a heating target is placed; an upper induction heating plate having a surface facing one surface of the lower induction heating plate; and an induction heating coil provided inside at least one of the lower induction heating plate and the upper induction heating plate. The induction heating coil may have a two-layer structure of an upper layer and a lower layer. The upper layer of the induction heating coil may have a meandering serpentine pattern.

In an exemplary embodiment of the present invention, a third part of the induction heating coil may be arranged to extend in a height direction (or depth direction) of the induction heating plate so as to connect a first part of the induction heating coil and a second part of the induction heating coil arranged on planes different from each other (or in other words, at different depths). That is, the third part of the induction heating coil may extend in the height or depth direction of the induction heating plate. The third part of the induction heating coil may also be arranged in a vertical direction, which is the height direction of the induction heating plate, or may also extend in an oblique direction.

The lower layer on which the second part of the induction heating coil is arranged may be parallel with the upper layer on which the first part of the induction heating coil is arranged. In this case, the upper layer of the induction heating coil and the lower layer of the induction heating coil may be spaced apart from each other. That is, even in the case of a two-layer structure, the first part of the induction heating coil and the second part of the induction heating coil are arranged on different planes so as not to be short-circuited with each other.

In an exemplary embodiment of the present invention, a length of the third part may be 0 mm or longer. More specifically, the length may be 0 mm or longer and 40 mm or shorter, but the upper limit of the length may vary depending on a size of the induction heating plate.

In this case, the length of the third part of 0 mm means that the first and second parts of the induction heating coil are arranged on the same plane, and the length of the third part longer than 0 mm means that the first part and the second part of the induction heating coil have a two-layer structure.

In an exemplary embodiment of the present invention, the first part of the induction heating coil and the second part of the induction heating coil may have a connected structure. In this case, in the case of a two-layer structure, a third part of the induction heating coil may be further included. For example, in the case of a two-layer structure, the first part of the induction heating coil may have a meandering serpentine pattern from a start point to an end point of the first part. Subsequently, the induction heating coil extends vertically from the end point of the first part of the induction heating coil in a direction towards the second part of the induction heating coil. In this case, the vertically extending coil means the third part of the induction heating coil. The second part of the induction heating coil may be formed as the induction heating coil extends from an end point of the third part of the induction heating coil in a direction towards the start point of the first part of the induction heating coil.

A shape of the second part of the induction heating coil is not particularly limited as long as it can tangentially meet a radially outward curve of the first part of the induction heating coil. However, in the case of a two-layer structure, the second part may preferably have a linear shape because the process cost can be reduced.

In addition, if the induction heating coil does not have a two-layer structure, the third part of the induction heating coil is not necessary. Further, a shape of the second part of the induction heating coil is not particularly limited as long as it is not short-circuited with the first part of the induction heating coil. When seen in a direction perpendicular to the two layers, the second part may tangentially meet a radially outward curve of the first part of the induction heating coil. However, the second part of the induction heating coil preferably has more linear portions because the process cost can be reduced.

Here, the second part of the induction heating coil may have a portion extending in a direction to cross a portion of the first part of the induction heating coil. However, the crossing does not necessarily mean an actual meeting of the two parts of the induction heating coil, when viewed in the direction perpendicular to the two layers. That is, when viewed in the direction perpendicular to the two layers - or in other words, in the depth direction of the induction heating plate, the second part of the induction heating coil may either meet the first part of the induction heating coil, or surround (a periphery of) the first part of the induction heating coil. That is, they may not meet, when viewed in the depth direction of the induction heating plate.

In an exemplary embodiment of the present invention, the first part of the induction heating coil and the second part of the induction heating coil may together form at least one closed loop, when viewed in the thickness direction perpendicular to the major surface of the induction heating plate.

In an exemplary embodiment of the present invention, the at least one induction heating plate may include a non-conductive material. That is, in an exemplary embodiment of the present invention, at least one of the first induction heating plate and the second induction heating plate may include a non-conductive material.

The induction heating plate may include an alternating current generator for providing alternating current to the induction heating coil and may serve to protect the induction heating coil. The use of a non-conductive material as a material of the induction heating plate is to prevent an induced current by the induction heating coil from being generated also in the induction heating plate.

The induction heating plate may be a mold made of a non-conductive material. The non-conductive material may be epoxy, but is not limited thereto.

The induction heating coil and the induction heating plate may constitute one set.

The induction heating unit may include an alternating current generator, but is not limited thereto, and any means capable of generating an electromagnetic induction phenomenon for the induction heating coil may be applied.

In an exemplary embodiment of the present invention, the first part of the induction heating coil may have a serpentine pattern, by reciprocating in a width direction of the induction heating plate while proceeding in a longitudinal direction.

In other words, the first part of the induction heating coil may have a meandering serpentine pattern that is built in the induction heating plate and reciprocate in a zigzag form in the width direction of the induction heating plate while proceeding in the longitudinal direction. In the meandering serpentine pattern, a semi-elliptical shape may be alternately repeated, wherein the semi-elliptical shape has a long radius in a direction perpendicular to a central axis, i.e., in the width direction of the heating plate and a short radius in a direction of the central axis, i.e., in the longitudinal direction of the induction heating plate. The central axis means a straight line passing through a center of the serpentine pattern in a direction in which the meandering serpentine pattern proceeds.

In an exemplary embodiment of the present invention, the first part of the induction heating coil has a semi-elliptical shape while reciprocating in the width direction of the induction heating plate. The semi-elliptical shape may have a long radius in the width direction of the induction heating plate and a short radius in the longitudinal direction of the induction heating plate. The long radius may be 50 mm or longer and 80 mm or shorter, and the short radius may be 10 mm or longer and 40 mm or shorter.

In an exemplary embodiment of the present invention, the semi-elliptical shape may be periodically arranged along the central axis. In addition, in an exemplary embodiment of the present invention, a period of repetition of the semi-elliptical shape may be 10 mm or greater and 30 mm or less, preferably 10 mm or greater and 25 mm or less, and more preferably 10 mm or greater and 25 mm or less.

When the above conditions are satisfied, the efficiency of induction heating can be further enhanced.

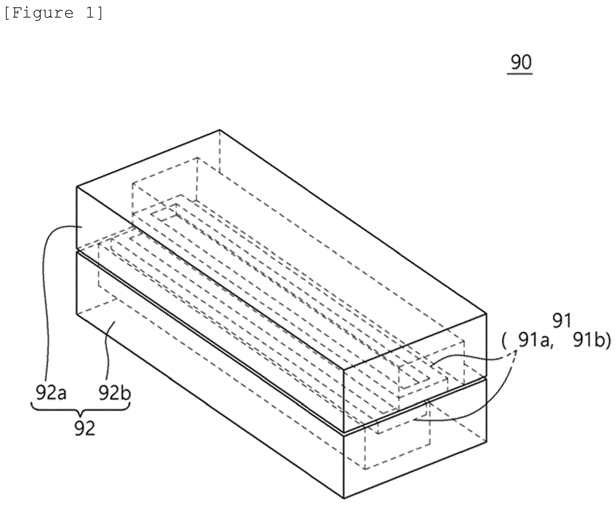

FIG. 1 illustratively shows an induction heating device of the related art. Referring to FIG. 1, an induction heating device 90 may include an induction heating coil 91 and an induction heating plate 92. More specifically, induction heating coils 91a and 91b may be built in induction heating plates 92a and 92b. The induction heating device 90 of the related art may include a U-shaped induction heating coil 91. The induction heating coils 91a and 91b may face each other. The specific arrangement of the induction heating coil 91 may be as shown in FIG. 1, but is not limited thereto. When alternating current is applied to the induction heating coil 91, induced current can be generated in the metallic electrodes in the stack, so the electrodes are heated by the induced current.

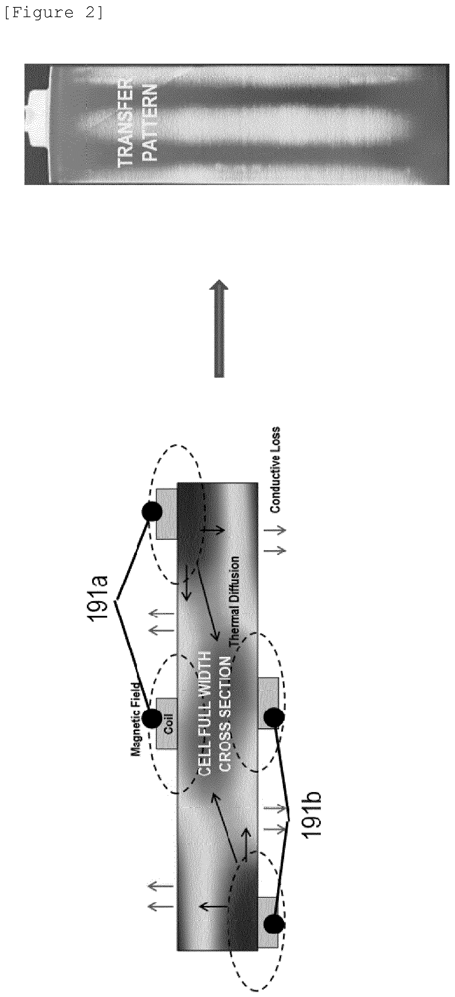

When the U-shaped induction heating coil of the related art is used, as shown in FIG. 2, it could be confirmed that the heat transferred to the induction heating coil exhibits a large difference depending on locations, and a specific type of heat transfer pattern appears.

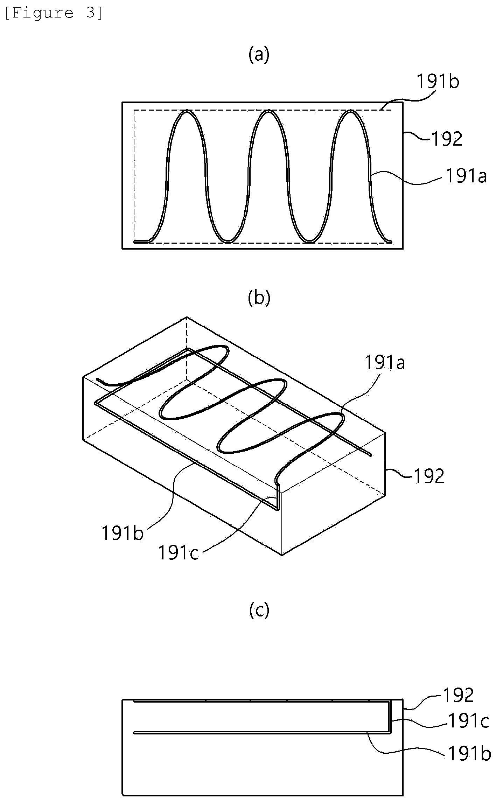

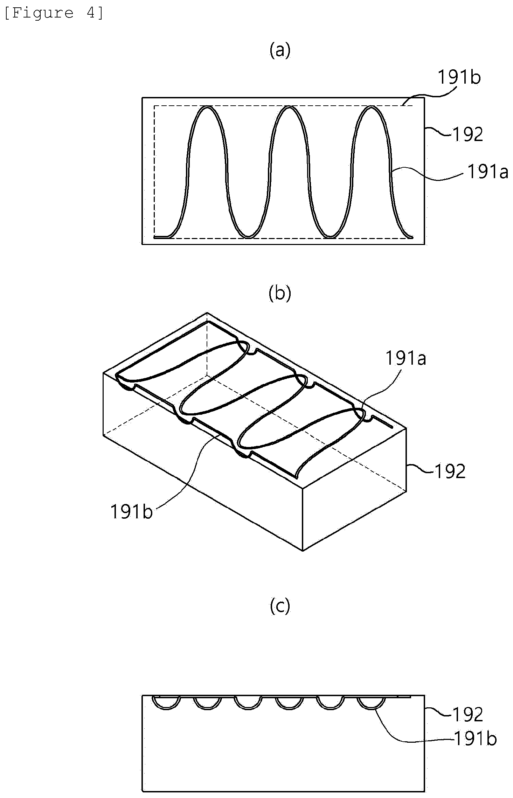

FIGS. 3 and 4 show an induction heating device according to an exemplary embodiment of the present invention. FIG. 3 illustratively shows a form in which the first part of the induction heating coil and the second part of the induction heating coil have a two-layer structure, and FIG. 4 illustratively shows a form in which the first part of the induction heating coil and the second part of the induction heating coil are arranged on the same plane.

FIG. 3(a) shows a shape of an induction heating coil that appears when seen through the induction heating plate 192 in a plan view - or in a thickness direction of the induction heating plate, the thickness direction being perpendicular to a major surface of the induction heating plate. FIG. 3(b) is a perspective view showing that the induction heating coil is built in the induction heating plate 192. FIG. 3(c) shows a shape of the induction heating coil that appears when seen through the induction heating plate 192 from a lateral side of the induction heating plate 192.

Referring to FIG. 3(b), the induction heating coil may be composed of three parts. The induction heating coil 191 may include a first part 191a of the induction heating coil reciprocating in a zigzag shape in the width direction of the induction heating plate 192, a second part 191b of the induction heating coil, and a third part 191c of the induction heating coil connecting the first part 191a of the induction heating coil and the second part 19b of the induction heating coil with each other.

Assuming that the first part 191a of the induction heating coil is arranged on a first plane, the second part 191b of the induction heating coil may be arranged on a plane different from the first plane. This is to prevent a short circuit between the second part 191b of the induction heating coil and the first part 191a of the induction heating coil.

Therefore, the third part 191c of the induction heating coil may proceed in the depth direction, i.e., in the z-axis direction of the induction heating plate in order to connect the first part 191a of the induction heating coil and the second part 191b of the induction heating coil.

In other words, the induction heating coil 191 may have a two-layer structure and may be integrally formed while the third part 191c of the induction heating coil connects the two layers.

Referring to FIG. 3(b), assuming that the first part 191a of the induction heating coil is arranged on an upper layer (second layer) and the second part 191b of the induction heating coil is arranged on a lower layer (first layer), the second part 191b of the induction heating coil, being in the lower layer, may surround the first part 191a of the induction heating coil.

That is, when seen in the thickness direction of the induction heating plate, the second part 191b of the induction heating coil tangentially meet a radially outward curve (or semi-elliptical shape) of the first part 191a of the induction heating coil .

As shown in FIG. 3(b), the second part 191b of the induction heating coil winds around the first part 191a of the induction heating coil. That is, when seen in the thickness direction of the induction heating plate, the second part of the induction heating coil may have a shape surrounding the first part of the induction heating coil.

As a result, referring to FIG. 3(a), which is a plan view, the first part 191a of the induction heating coil having the serpentine pattern and the second part 191b of the induction heating coil having the linear shape are combined to create multiple closed loops. The plurality of closed loops are arranged to be adjacent to each other along the longitudinal direction of the induction heating plate.

Each of the closed loops may be considered as constituting one induction heating unit.

As a result, in the induction heating device according to an embodiment of the present invention, a plurality of induction heating units in the form of closed loops are densely and adjacently arranged in the induction heating plate, along the longitudinal direction of the induction heating plate. Therefore, heating targets of various sizes can be heated regardless of lengths, as long as widths of the heating targets to be inductively heated are constant.

On the other hand, referring to FIG. 4, unlike the exemplary embodiment of FIG. 3, the first part 191a of the induction heating coil and the second part 191b of the induction heating coil may be arranged on the same plane, i.e., at the same depth in the thickness direction of the induction heating plate.

In this case, the two parts may be short-circuited with each other when the second part 191b of the induction heating coil meets the first part 191a of the induction heating coil. Therefore, the second part 191b of the induction heating coil may be designed to avoid the first part 191a of the induction heating coil at a place where the second part approaches the first part 191a of the induction heating coil, for example, by circumventing the first part 191a, as illustrated in Fig. 4(c).

As a result, as in the case of FIG. 3, referring to FIG. 4(a), which is a plan view, the first part 191a of the induction heating coil having the serpentine pattern and the second part 191b of the induction heating coil having the linear shape together form multiple closed loops, when seen in the thickness direction of the induction heating plate. The plurality of closed loops are arranged to be adjacent to each other along the longitudinal direction of the induction heating plate.

Each of the closed loops may be considered as constituting one induction heating unit.

When seen in a plan view with reference to FIGS. 3(a) and 4(a), the second part 191b of the induction heating coil meets the first part 191a of the induction heating coil. However, this is not to be considered as a limitation. The second part 191b of the induction heating coil may surround the first part 191a of the induction heating coil at a predetermined distance from the first part 191a of the induction heating coil.

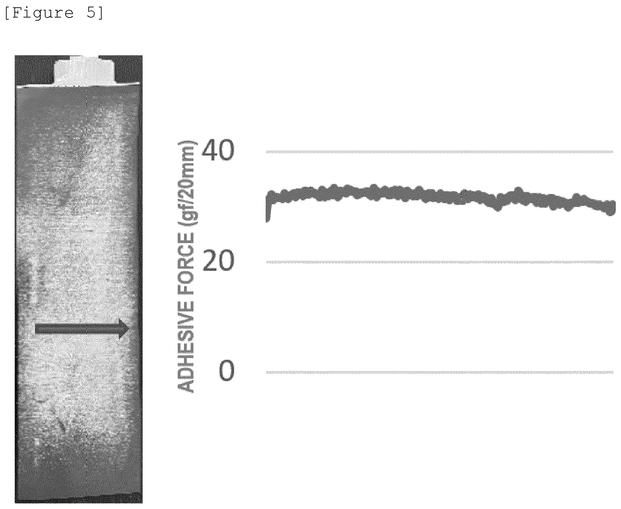

As shown in FIG. 5, it could be confirmed that the stack can be uniformly heated as a result of induction heating using the induction heating device according to the present invention.

That is, by observing the completed electrode assembly and measuring the adhesive force pattern, it could be confirmed that the adhesive force pattern was uniform (see Fig. 5).

### <Method for Manufacturing Electrode Assembly>

An exemplary embodiment of the present invention provides a method for manufacturing an electrode assembly including a first electrode, a separator, and a second electrode by using the induction heating device according to an exemplary embodiment of the present invention.

The method for manufacturing an electrode assembly according to the present invention includes a step of inductively heating the stack between a stacking process, which is a step of manufacturing the stack, and a heating and pressing step, which is a step of heating and pressing the stack.

The heating and pressing step involves a lower plate configured that is configured for placing thereon an electrode assembly to be subject to heating and pressing and for applying heat, and an upper plate disposed opposite to the lower plate such that the electrode assembly can be interposed between the lower and the upper plate. The lower plate and the upper plate may be pressing blocks configured as a pair.

In the heating and pressing step of heating and pressing the electrode assembly, electrodes located at the outermost of the stack (uppermost and lowermost of the stack) are in direct physical contact with the lower plate and the upper plate, and therefore, can be applied with more heat and pressure than electrodes at the center of the stack. This is because in the heating and pressing step, heating is performed while performing pressing in a state in which the uppermost and lowermost of the stack are physically contacted.

That is, in the heating and pressing step, the electrodes in the stack can be heated to different temperatures depending on their positions, so that the electrodes and the separator have different adhesive forces depending on their positions. As a result, there may occur a problem in that the performance of the electrode assembly becomes non-uniform depending on positions within the electrode assembly.

Accordingly, in the method for manufacturing an electrode assembly according to the present invention, more heat is applied to a local region, particularly to a central portion in the stack through the induction heating step. The heat applied to the local region diffuses throughout the electrode assembly. By heating and pressing the electrode assembly in the heating and pressing step following the induction heating step, the electrode assembly can be uniformly heated as a whole.

Through this, the air permeability deviation of the separator inside the electrode assembly manufactured through the heating and pressing step is reduced and the adhesive force deviation between the electrode and the separator is reduced, so that an electrode assembly with uniform performance can be manufactured.

In an exemplary embodiment of the present invention, the stacking step may include supplying the first electrode to a stack table; supplying the second electrode to the stack table; and supplying the separator to the stack table.

In the present disclosure, "induction heating" refers to heating a target object by using an electromagnetic induction. In this way, Joule heat is generated in the target object by the induced current generated in the target object by the electromagnetic induction. Therefore, the induction heating is a heating method capable of locally heating even a target object at a certain distance from a heating device, as compared with a direct heating method of heating a target object in direct contact with the target object.

A coil may be used to perform the induction heating, which may be defined as an "induction heating coil". The induction heating method has an advantage in that it is easy to control heat and time applied to a heating target. In addition, the induction heating method is capable of non-contact heating, and therefore, may not damage the heating target.

In the present disclosure, "induction heating step" may mean locally heating the stack by using an electromagnetic induction heating. The locally heated stack may have electrodes arranged in the central portion of the stack. When the direct heating method is used, the uppermost or lowermost electrode of the electrode assembly may be heated more than the central electrode of the electrode assembly. However, in the method for manufacturing an electrode assembly according to an exemplary embodiment of the present invention, the central portion of the electrode assembly is first selectively heated through an induction heating method, and then the electrode assembly is heated by a direct heating method in a subsequent heating and pressing step, so that the electrode assembly can be uniformly heated in the end.

In an exemplary embodiment of the present invention, in the induction heating step, a portion of the stack may be inductively heated, and the heat diffuses to the entire stack, thereby heating the entire stack.

In an exemplary embodiment of the present invention, in the induction heating step, the first electrode or the second electrode of the stack may be inductively heated. More specifically, in an exemplary embodiment of the present invention, in the induction heating step, the first electrode or second electrode arranged at a center of the stack may be inductively heated. In the heating and pressing step, a relatively small amount of heat may be applied to the first electrode or second electrode arranged at the center of the stack, as compared with the first electrode or second electrode arranged at the outermost of the stack. However, since the heat may be first applied to the first electrode or second electrode arranged at the center of the stack through the induction heating step, and then the heating and pressing step may be subsequently performed, heat can be uniformly applied throughout the stack.

In the present disclosure, the induction heating may include induction heating for the entire surface of the stack, in addition to induction heating for only a partial region (local region) of the surface of the stack. However, even when only a partial region is inductively heated, the object of the present invention can be achieved. In addition, the induction heating can be distinguished from the heating and pressing in that no pressure is applied to the stack.

In an exemplary embodiment of the present invention, the induction heating step may be performed for 1 second to 60 seconds, preferably 5 seconds to 40 seconds, and more preferably 10 seconds to 30 seconds. The induction heating time may be selected in consideration of a degree to which the electrode assembly is non-uniformly heated in the heating and pressing step.

In an exemplary embodiment of the present invention, the induction heating step may inductively heat the stack using an induction heating coil.

The method for manufacturing an electrode assembly according to an exemplary embodiment of the present invention may include a step of conveying the stack to the heating and pressing step after the stacking step. In the conveying step, the stack may be gripped with a gripper in order to convey the stack.

The gripper may maintain the gripping of the stack in the heating and pressing step.

The method for manufacturing an electrode assembly according to an exemplary embodiment of the present invention may inductively heat the stack while conveying the stack from the stack table to the heating and pressing unit.

More specifically, in an exemplary embodiment of the present invention, the induction heating step may further include gripping the stack with a gripper including an induction heating coil and conveying the stack between the stacking step and the heating and pressing step. The induction heating step may be performed with the gripper during the conveying step.

More specifically, in an exemplary embodiment of the present invention, the induction heating step may include gripping the stack with a gripper including an induction heating coil; conveying the gripped stack to the heating and pressing step; and inductively heating the stack with the induction heating coil of the gripper while conveying the stack.

That is, since the induction heating coil is built in or attached to the gripper, there is no need to provide a separate space for induction heating, making an electrode assembly manufacturing apparatus compact.

Meanwhile, in an exemplary embodiment of the present invention, the induction heating step may further include conveying the stack to an induction heating device including an induction heating coil between the stacking step and the heating and pressing step, and the induction heating step may be performed by the induction heating device. As long as the induction heating device can perform induction heating, a method commonly used in the related field may be used.

More specifically, in an exemplary embodiment of the present invention, the induction heating step may include gripping the stack with a gripper and conveying the gripped stack to an induction heating device including an induction heating coil; and inductively heating the stack in the induction heating device.

That is, the gripper may not be equipped with an induction heating coil, but an induction heating device separate from the gripper may include the induction heating coil. When a separate induction heating device is used, the induction heating step can be performed on a stack with a higher thickness.

In addition, when the separate induction heating device is used as in the present invention, an electrode tab portion protruding from the electrode may be additionally heated by the induction heating device, and therefore, a temperature difference between the electrode tab and the electrode can be reduced.

In an exemplary embodiment of the present invention, in the induction heating step, the stack may be heated at a temperature of 40°C or higher and 90°C or lower, and preferably 50°C or higher and 80°C or lower. When the stack is inductively heated within the temperature range described above, the stack can be heated without damaging the electrodes and the separator inside the stack.

In an exemplary embodiment of the present invention, the induction heating coil may be in contact with the stack or spaced from the stack by a predetermined distance.

When the induction heating coil is in contact with the stack (a distance between the stack and the induction heating coil is 0 mm), the induction heating coil can transfer heat as much as possible, and therefore, it is possible to increase the internal temperature of the stack even if induction heating is performed for a short time.

In addition, when the induction heating coil is spaced from the stack by a predetermined distance, it is possible to increase the internal temperature of the stack without damaging the stack by heat generated from the induction heating coil.

In an exemplary embodiment of the present invention, the predetermined distance may be 15 mm or less. More specifically, in an exemplary embodiment of the present invention, the predetermined distance may be greater than 0 mm and equal to or less than 15 mm, preferably equal to or greater than 0.05 mm and equal to or less than 10 mm, and more preferably equal to or greater than 0.3 mm and equal to or less than 5 mm. When the above distance is satisfied, it is possible to inductively heat the electrode without damaging the stack, as described above.

The method for manufacturing an electrode assembly according to an exemplary embodiment of the present invention may further include a step of removing the induction heating unit from a moving line of the electrode assembly before the heating and pressing step. Through this, physical collision between the induction heating unit and the heating and pressing unit can be prevented.

In addition, physical collision between the gripper and the heating and pressing unit can be also prevented by implementing a first heating and pressing step and a second heating and pressing step, to be described below.

The method for manufacturing an electrode assembly according to an exemplary embodiment of the present invention may further include a standby step of allowing the stack to stand by in an atmospheric state for a certain period of time between the induction heating step and the heating and pressing step. After the induction heating step, the heated stack may be left in an atmospheric state for a certain predetermined period of time so that the heat applied to the stack by the induction heating diffuses throughout the stack.

Through the standby step, heat transferred to a partial region of the stack may be transferred to the entire region of the stack. In this way, by intentionally stopping the induction heating for the stack for a certain period of time before proceeding with the heating and pressing step, the heat transferred to the stack by the induction heating diffuses uniformly throughout the stack.

Thereafter, by heating and pressing the stack in the subsequent heating and pressing step, uniformity in thickness of the electrode can be increased throughout the electrode assembly.

In an exemplary embodiment of the present invention, the standby step may be performed for 3 seconds or longer and 60 seconds or shorter, preferably 5 seconds or longer and 45 seconds or shorter, and more preferably 10 seconds or longer and 40 seconds or shorter.

When the time range described above is satisfied, it is possible to secure a time for which heat transferred to a partial region of the electrode inside the stack by the induction heating can distribute evenly throughout the stack. That is, if the standby step is performed for less than 3 seconds, the heat transferred to a partial region of the stack is difficult to transfer throughout the electrode. On the other hand, if the standby step is performed for longer than 60 seconds, the temperature of the electrode raised by the transferred heat may be decreased, and therefore, there may be a problem in that the effect of induction heating is reduced.

The standby time may be changed according to the heating time and heating temperature range of the stack in the subsequent heating and pressing step.

In an exemplary embodiment of the present invention, for the step of manufacturing a stack in which the first electrode and the second electrode are alternately arranged between folds of the folded separator, a technology that is commonly used in the related field may be used. For example, processes of stacking a first electrode on the stack table, covering the first electrode with a separator, stacking a second electrode on an upper surface of the separator, folding the separator to cover the second electrode and then again stacking a first electrode on the upper surface of the separator may be repeated. This is referred to as a zigzag stacking method in the present disclosure. In this case, in performing the process of moving the separator while having it cover the first electrode or the second electrode, various methods may be applied, including a method in which the stack table moves left and right, a method in which the separator moves left and right, a method in which the stack table rotates, and the like.

In the zigzag stacking method, a holding mechanism may grip the stack to maintain alignment of the stack during the process of stacking the first electrode, the second electrode, and the separator.

In the present disclosure, the "holding mechanism" is a tool for gripping a stack placed on a stack table in order to stack the first electrode or the second electrode in the zigzag stacking method, which is different from the gripper for gripping the stack in the heating and pressing step.

In an exemplary embodiment of the present invention, the separator may be supplied in a form of a separator sheet. That is, the separator may be supplied in a continuous form. In addition, the "upper surface" of the electrode/separator may refer to a surface that is opposite to a surface which faces the stack table.

The method for manufacturing an electrode assembly according to an exemplary embodiment of the present invention may include a heating and pressing step of heating and pressing the stack inductively heated as described above. In the heating and pressing step, the stack may be heated while being pressed in a direction of the stacking axis. In addition, the heating and pressing step may be performed by a heating and pressing unit, as described below.

Further, in an exemplary embodiment of the present invention, the heating and pressing step may include moving the stack between a pair of pressing blocks including press heaters; surface-pressing the stack by moving the pair of pressing blocks in the direction of the stacking axis; and heating the stack.

The pair of pressing blocks may include a lower plate and an upper plate facing the lower plate.

Further, in an exemplary embodiment of the present invention, the heating and pressing step may include moving the stack between a pair of pressing blocks; surface-pressing the stack by moving the pair of pressing blocks in the direction of the stacking axis; and heating the stack by a separately provided press heater.

That is, the press heater may be included in the pressing block or may be provided as a separate configuration.

The method for manufacturing an electrode assembly according to an exemplary embodiment of the present invention may further include a step of releasing gripping of the gripper before the heating and pressing step.

That is, the step of releasing gripping of the gripper may include stopping pressing on the upper surface of the stack by the gripper; and spacing the gripper from the stack.

In addition, the step of moving the stack between the pair of pressing blocks including press heaters in the heating and pressing step may include not only a case where only the stack itself is moved but also a case where the stack, being placed on the stack table, is moved together with the stack table. In this case, a subject to be heated and pressed by the pair of pressing blocks and the press heaters may refer to the stack and the stack table.

In an exemplary embodiment of the present invention, in the heating and pressing step, the stack may be heated and pressed for 5 seconds to 60 seconds under a temperature condition of 50°C to 90°C and a pressure condition of 0.5 Mpa to 6.0 Mpa. More preferably, the stack may be heated and pressed for 5 seconds to 30 seconds under a temperature condition of 65°C to 90°C and a pressure condition of 1.0 Mpa to 6.0 Mpa. More preferably, the stack may be heated and pressed for 7 seconds to 25 seconds under a temperature condition of 65°C to 85°C and a pressure condition of 3 Mpa to 5.5 Mpa.

When heating and pressing are performed while satisfying the above conditions, the adhesive forces between the first electrode and the separator and between the separator and the second electrode can be improved without damaging the first electrode, the separator, and the second electrode. As a result, the performance of the electrode assembly can be improved.

In an exemplary embodiment of the present invention, the heating and pressing step is not performed while the induction heating step is performed.

In an exemplary embodiment of the present invention, the induction heating step may include measuring a temperature distribution on a surface of the stack during the induction heating; adjusting an induction heating temperature for the stack according to the measured temperature distribution; and inductively heating the stack based on the set induction heating temperature. That is, by adjusting the induction heating temperature of the stack according to the measured temperature distribution of the upper surface of the stack, it is possible to inductively heat the electrode in an efficient manner without using unnecessary energy.

### <Electrode Assembly Manufacturing Apparatus>

An exemplary embodiment of the present invention provides an apparatus for manufacturing an electrode assembly including a first electrode, a separator, and a second electrode by using the induction heating device according to an exemplary embodiment of the present invention.

For reference, a semi-finished product state in which the first electrode, the separator, and the second electrode are repeatedly stacked is referred to as a stack, and a separator winding process is performed on the semi-finished product so that one distinct component can be classified as an electrode assembly.

The electrode assembly manufacturing apparatus includes an induction heating unit. The induction heating unit of the electrode assembly manufacturing apparatus of the present invention performs the induction heating step described above. That is, when the electrode assembly manufacturing apparatus according to the present invention is used, the stack including the first electrode, the separator, and the second electrode is uniformly heated in the process of performing the heating and pressing step by the heating and pressing unit, so that uniform adhesive force can be secured between the respective layers in the stack. Through this, the air permeability deviation of the separator, the separator thickness change deviation and the adhesive force deviation according to the stacked position of the electrode assembly are reduced, so that an electrode assembly with uniform performance can be manufactured while reducing a volume of the electrode assembly. In addition, an electrode assembly with an increased energy density per unit volume can be manufactured.

The electrode assembly manufacturing apparatus according to the present invention may further include a separator supply unit configured to supply the separator to the stack table; a first electrode supply unit configured to supply the first electrode to the stack table; and a second electrode supply unit configured to supply the second electrode to the stack table.

In an exemplary embodiment of the present invention, the induction heating unit may be a gripper that grips the stack in order to convey the stack to the heating and pressing unit. The gripper may include an induction heating coil. As described above, the induction heating coil may be built in the gripper or may be installed outside the gripper. When the gripper serves as an induction heating unit, a process space for installing the induction heating unit can be saved. In addition, a process time can also be shortened because induction heating can be performed while conveying the stack. The gripper may perform a function of gripping the stack while conveying the stack from the stack table to the heating and pressing unit.

In an exemplary embodiment of the present invention, the induction heating unit may be installed separately from the gripper for conveying the stack. That is, the induction heating unit may include an induction heating device including an induction heating coil; and a moving unit configured to move the induction heating device to a surface of the stack. When the moving unit moves the induction heating device to an appropriate distance from the stack, the induction heating device may inductively heat the stack. When the induction heating on the stack is completed, the moving unit may separate the induction heating device from the stack.

In this case, as described above, there is an advantage in that it is easy to apply even if the stack has a high thickness, and there is an advantage in that it can be used even when inductively heating the electrode tab.

In the present specification, "unit" means an interface that performs a specific function within the electrode assembly manufacturing apparatus.

The induction heating coil of the electrode assembly manufacturing apparatus according to an exemplary embodiment of the present invention may be in contact with the stack or spaced from the stack by a predetermined distance. In this case, the predetermined distance may be 15 mm or less, more specifically, greater than 0 mm and equal to or less than 15 mm, preferably equal to or greater than 0.05 mm and equal to or less than 10 mm, and more preferably equal to or greater than 0.3 mm and equal to or less than 5 mm.

The advantages that are achieved when the induction heating coil is in contact with the stack and when the induction heating coil is spaced from the stack by a predetermined distance are as described in the method for manufacturing an electrode assembly.

The electrode assembly manufacturing apparatus according to an exemplary embodiment of the present invention may further include a control unit configured to measure a temperature distribution on a surface of the stack, to adjust an induction heating temperature for the stack according to the measured temperature distribution, and to determine whether to stop induction heating for the stack based on the induction heating temperature and an induction heating time for the stack.

In addition, the control unit may also be configured to adjust the induction heating time for the stack.

That is, a condition for performing the induction heating step and a condition for performing the standby step can be set by the control unit. For each condition, the contents described in the method for manufacturing an electrode assembly may be applied.

In an exemplary embodiment of the present invention, the heating and pressing unit may include a pair of pressing blocks, and may be configured to surface-press the stack while moving the pair of pressing blocks towards each other.

The heating and pressing unit includes a pair of pressing blocks and a press heater for heating the pressing blocks. While the press heater heats the pressing blocks, the pair of pressing blocks move towards each other, so that the stack placed between the pressing blocks can be surface-pressed.

In this case, the pair of pressing blocks may include press heaters therein.

In another exemplary embodiment of the present invention, the heating and pressing unit may include two separate heating and pressing units. That is, the heating and pressing unit may include a first heating and pressing unit and a second heating and pressing unit.

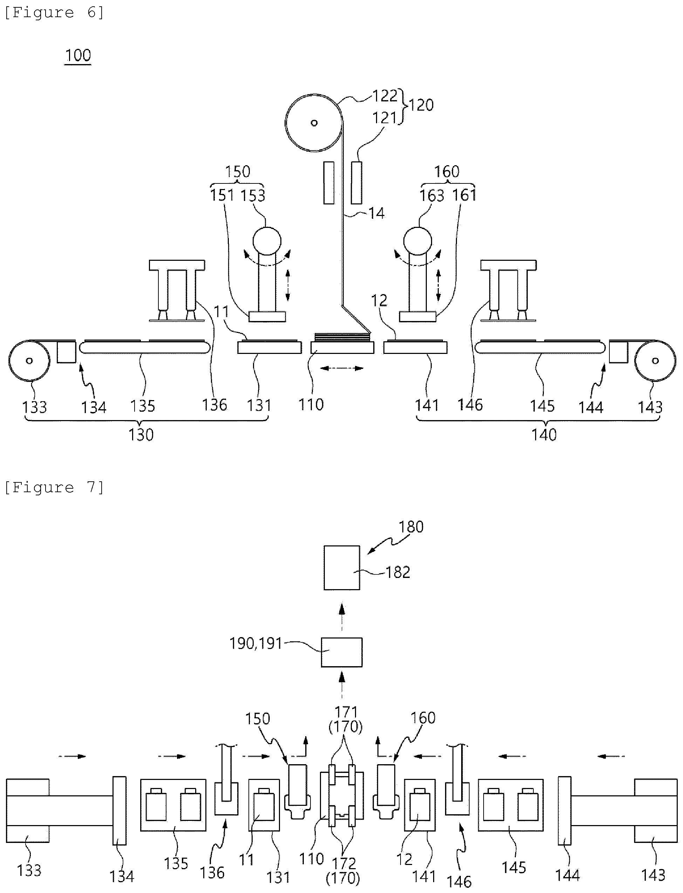

Referring to FIG. 7, the first heating and pressing unit may include a pair of first pressing blocks. Pressing surfaces of the pair of first pressing blocks may include grooves corresponding to the gripper so as to press the stack while the gripper grips the stack. The pressing surfaces other than the grooves may be planes. The second heating and pressing unit may include a pair of second pressing blocks. Pressing surfaces of the pair of second pressing blocks may be provided as planes. That is, when the stack is placed on the press surfaces of the pressing blocks, the second pressing blocks may move mutually to heat and press the stack.

When the heating and pressing unit includes two separate units as described above, it is possible to prevent loss of adhesive force between respective layers inside the stack due to cooling while the heated stack is conveyed.

Conditions for heating and pressing the stack by the heating and pressing unit are the same as those of the heating and pressing step described above.

In an exemplary embodiment of the present invention, the stack table may include a table body on which the stack is to be placed, and a drive unit configured to drive the table body. The table body may include a stack table heater capable of heating the stack to a predetermined temperature when the stack is placed.

In an exemplary embodiment of the present invention, the first electrode supply unit may include at least one of a first electrode seating table, a first electrode roll, a first cutter, a first conveyor belt, and a first electrode supply head.

In addition, the first electrode seating table may include a first electrode heater for heating the first electrode placed on the first electrode seating table to a predetermined temperature.

In an exemplary embodiment of the present invention, the second electrode supply unit may include at least one of a second electrode seating table, a second electrode roll, a second cutter, a second conveyor belt, and a second electrode supply head.

In addition, the second electrode seating table may include a second electrode heater for heating the second electrode placed on the second electrode seating table to a predetermined temperature.

In an exemplary embodiment of the present invention, a first electrode stacking unit may include a first suction head that vacuum-sucks the first electrode seated on the first electrode seating table. The first electrode may be moved from the first electrode seating table to the stack table through the first electrode stacking unit.

A second electrode stacking unit may include a second suction head that vacuum-sucks the second electrode seated on the second electrode seating table. The second electrode may be moved from the second electrode seating table to the stack table through the second electrode stacking unit.

In an exemplary embodiment of the present invention, the first electrode may be a positive electrode, and the second electrode may be a negative electrode.

In an exemplary embodiment of the present invention, the first electrode may be a negative electrode, and the second electrode may be a positive electrode.

In an exemplary embodiment of the present invention, for current collectors used for a positive electrode and a negative electrode, an active material, a conductive material and the like, active materials known in the art can be used without limitation, and also for methods for manufacturing the positive electrode and the negative electrode, methods known in the related art can be used without limitation.

In an exemplary embodiment of the present invention, as for the separator, active materials known in the art can be used without limitation, and also as for a method for manufacturing a separator, methods known in the related art can be used without limitation. However, in an exemplary embodiment of the present invention, the separator may include a porous polymer substrate and an organic/inorganic composite porous coating layer formed on at least one surface of the polymer substrate, and the organic/inorganic composite porous coating layer may include particulate binder resins and inorganic particles.

In an exemplary embodiment of the present invention, the particulate binder resin may include at least one selected from the group consisting of a fluorine-based polymer, an acrylic polymer particle, and a hybrid polymer particle of an acrylic polymer particle and an acrylic polymer.

In an exemplary embodiment of the present invention, the fluorine-based polymer may be a homopolymer of vinylidene fluoride, a copolymer of vinylidene fluoride and another polymerizable monomer, or a mixture of two or more thereof.

In an exemplary embodiment of the present invention, the inorganic particle may be Al₂O₃, but is not limited thereto.

Since the organic/inorganic composite porous coating layer is included, an electrode assembly having increased adhesive force between the electrode and the separator can be manufactured by applying the induction heating step and the heating and pressing step described in the electrode assembly manufacturing method and/or the electrode assembly manufacturing apparatus.

Hereinafter, an electrode assembly manufacturing apparatus and an electrode assembly manufacturing method according to an exemplary embodiment of the present invention will be described in more detail. The following description assumes that the electrode assembly of the present invention is zigzag stacked.

FIG. 6 is a cross-sectional view showing a process flow of an electrode assembly manufacturing apparatus according to an exemplary embodiment of the present invention, and FIG. 7 is a plan view showing the process flow of the electrode assembly manufacturing apparatus according to the exemplary embodiment of the present invention. Here, for convenience, in FIG. 6, a holding mechanism 170, a heating and pressing unit 180, and an induction heating unit 190 shown in FIG. 7 are omitted, and in FIG. 7, a separator supply unit 120 shown in FIG. 6 is omitted.

Referring to FIGS. 6 to 8, an electrode assembly manufacturing apparatus 100 according to an exemplary embodiment of the present invention includes a separator supply unit 120 that supplies a separator 14 to a stack table 110, a first electrode supply unit 130 that supplies a first electrode 11 to the stack table 110, and a second electrode supply unit 140 that supplies a second electrode 12 to the stack table 110. The separator 14, the first electrode 11, and the second electrode 12 may be each supplied to the stack table 110 while being heated in the first electrode supply unit 130 and the second electrode supply unit 140.

The electrode assembly manufacturing apparatus 100 according to an exemplary embodiment of the present invention includes a first electrode stacking unit 150 that stacks the first electrode 11 supplied by the first electrode supply unit 130 on the stack table 110, and a second electrode stacking unit 160 that stacks the second electrode 12 supplied by the second electrode supply unit 140 on the stack table 110. In this case, the separator 14 supplied by the separator supply unit 120 is stacked in a zigzag form while alternately reciprocating from the left side to the right side of a stacking axis, and vice versa. In this case, the first electrode 11 and the second electrode 12 are alternately inserted into spaces created by folding the separator 14, and as a result, a stack is provided on the stack table 110, the stack having therein the first electrode 11, the separator 14, the second electrode 12, and the separator 14 repeatedly stacked.

The separator supply unit 120 may include a separator heating unit 121 and a separator roll 122. The separator heating unit 121 is selectively applicable.

More specifically, the first electrode supply unit 130 may include a first electrode seating table 131, a first electrode heater 132, a first electrode roll 133, a first cutter 134, a first conveyor belt 135, and a first electrode supply head 136. The first electrode heater 132 is selectively applicable.

The second electrode supply unit 140 may include a second electrode seating table 141, a second electrode heater 142, a second electrode roll 143, a second cutter 144, a second conveyor belt 145, and a second electrode supply head 146. The second electrode heater 142 is selectively applicable.

The first electrode stacking unit 150 stacks the first electrode 11 on the stack table 110. In this case, the first electrode stacking unit 150 may include a first suction head 151, a first head heater (not shown), and a first moving unit 153. In addition, the second electrode stacking unit 160 stacks the second electrode 12 on the stack table 110. The second electrode stacking unit 160 may include a second suction head 161, a second head heater (not shown), and a second moving unit 163.

The first electrode stacking unit 150 and the second electrode stacking unit 160 may further include heaters (not shown) for preheating the first electrode and the second electrode according to circumstances.

The electrode assembly manufacturing apparatus 100 according to an exemplary embodiment of the present invention may further include a holding mechanism 170 for securing the first electrode 11 and the second electrode 12 in place when they are stacked on the stack table 110. Further, the electrode assembly manufacturing apparatus 100 according to an exemplary embodiment of the present invention includes a heating and pressing unit 180 that heats and presses the stack placed on the stack table 110, so as to bond the first electrode 11, the separator 14, and the second electrode 12 to one another.

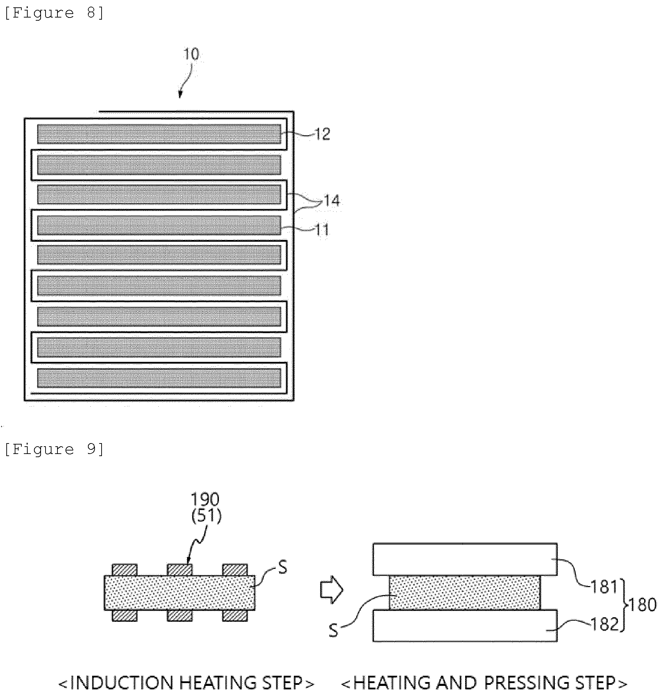

The electrode assembly manufacturing apparatus 100 according to an exemplary embodiment of the present invention further includes an induction heating unit 190 that inductively heats the stack and allows the heat to transfer to the electrodes in the stack. In addition, a control unit (not shown) for controlling, for example, whether or not to actuate the induction heating unit 190 may be further included. Through this, it is possible to finally manufacture an electrode assembly 10 as shown in FIG. 8.

FIG. 8 is a cross-sectional view illustratively showing an electrode assembly manufactured through an electrode assembly manufacturing apparatus and an electrode assembly manufacturing method according to an exemplary embodiment of the present invention.

Referring to FIG. 8, the electrode assembly 10 may have a stacked form including a separator folded and stacked in a zigzag form, and first electrodes or second electrodes alternately inserted into spaces between folds of the separator.

In this case, the electrode assembly 10 may be provided in such a form that the separator 14 surrounds the stack from the outside. However, it should be noted that the configuration of the electrode assembly 10 is not limited to the example of FIG. 8.

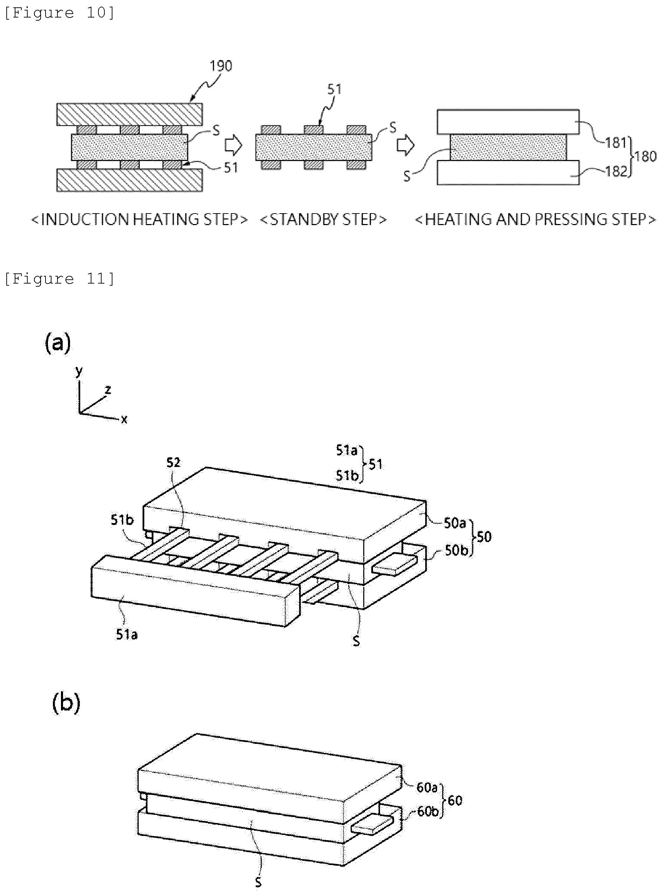

FIGS. 9 and 10 are views schematically showing an operation process of the induction heating unit according to an exemplary embodiment of the present invention.

Specifically, FIG. 9 shows a case where the induction heating unit 190 is a gripper 51. The gripper 510 may include an induction heating coil (not shown). The gripper 51 may perform induction heating on the stack S while gripping the stack S. While performing induction heating by the gripper 51, the stack S may be conveyed to the heating and pressing unit 180. In the heating and pressing unit 180, the stack S may be heated and pressed. In this case, before heating and pressing the stack S in the heating and pressing unit 180, a standby process (step) may be performed, which allows the stack S to stand by for a certain predetermined period of time after stopping induction heating. In this case, a condition of the standby process may be set by a control unit (not shown).

FIG. 10 shows another exemplary embodiment of the induction heating, illustrating that the stack S is inductively heated using the induction heating unit 190 provided separately from the gripper 51. In this case, the stack S is inductively heated after being moved to the induction heating unit. When the induction heating is completed, the stack S may be heated and pressed in the heating and pressing unit 180 as in FIG. 4. In this case, before heating and pressing the stack S in the heating and pressing unit 180, a standby process (step) may be performed, which allows the stack S to stand by for a certain predetermined period of time after stopping induction heating. Even in this case, a condition of the standby process may be controlled by the control unit (not shown). As shown in FIG. 5, the standby process may be performed in a state in which the stack S gets out of the induction heating unit 190 and is gripped by the gripper 51.

For the induction heating unit 190 of FIGS. 9 and 10, the induction heating device according to an exemplary embodiment of the present invention may be used.

In the present invention, the induction heating is performed in advance before the heating and pressing step, targeting electrodes arranged at the central portion of the electrode assembly, which are typically not effectively heated in the heating and pressing step of heating and pressing the electrode assembly.

FIG. 11 shows a configuration of the heating and pressing unit 50, and particularly shows the embodiment, according to which the heating and pressing unit 50 includes a first heating and pressing unit 50 and a second heating and pressing unit 60.

FIG. 11(a) is a perspective view showing the first heating and pressing unit 50, and FIG. 11(b) is a perspective view showing the second heating and pressing unit 60.

Referring to FIG. 11(a), the first heating and pressing unit 50 may heat and press the stack S in a state where the stack S is fixed by the gripper 51. The first heating and pressing unit 50 may include a pair of first pressing blocks 50a and 50b. In the pair of first pressing blocks 50a and 50b, pressing surfaces for pressing are all planes except for groove(s) for receiving fixing part(s) 51b of the gripper 51.

The gripper 51 may include a main body 51a, which may preferably have a length (x) and height (y) corresponding to or greater than the stack S, and a fixing part 51b that protrudes from the main body 51a, being configured to hold the stack S. Here, the length (x) of the stack S means the longest dimension from one end to the other end of the stack S, the height (y) means a dimension of the stack S in the stacking direction, and the width (z) may mean a horizontal extension of the stack S in a direction perpendicular to the length (x) and height (y).

The fixing part 51b can be adjusted in its position along the height direction of the main body 51a, so that the fixing part 51b can contact upper and lower surfaces of the stack S, to thereby fix the stack S.

Thereafter, the pair of first pressing blocks 50a and 50b move towards each other to heat and press the stack S. The electrodes and separator inside the electrode assembly are stably bonded through the heating and pressing.

The first heating and pressing unit 50 may be a component that supplements cooling while the inductively heated electrode assembly moves, and may be selectively provided. That is, the first heating and pressing unit may be omitted in some cases.

Referring to FIG. 11(b), the second heating and pressing unit 60 may finally heat and press the stack S that has been primarily heated and pressed by the first heating and pressing unit 50. The second heating and pressing unit 60 includes a pair of second pressing blocks 60a and 60b, and the pair of pressing blocks 61 and 62 may be moved towards each other to surface-press the stack S. In addition, in case of the pair of second pressing blocks 60a and 60b included in the second heating and pressing unit 60, pressing surfaces thereof for contacting and pressing the stack S may be all provided as planes.

The description of the electrode assembly manufacturing method according to the present invention may also be applied to the electrode assembly manufacturing apparatus according to the present invention, and vice versa.

Although the exemplary embodiments of the present invention have been described in detail, it will be apparent to one skilled in the art that the scope of the present invention is not limited thereto and various modifications and variations can be made without departing from the scope of the present invention defined in the claims.

## Claims

1. An induction heating device for being used in manufacturing an electrode assembly, comprising:
at least one induction heating plate (192) with a thickness, having a major surface thereof formed along its length and width, wherein the at least one induction heating plate (192) is adapted to perform an induction heating on an electrode assembly including a positive electrode, a negative electrode, and a separator arranged between the positive electrode and the negative electrode; and
an induction heating coil (191) built in the induction heating plate (192),
**characterised in that**
the induction heating coil (191) comprises:
a first part (191a) extending at a first predetermined depth along the thickness direction of the induction heating plate (192), forming a meandering serpentine pattern, and
a second part (191b) extending along a periphery of the induction heating plate (192) at a second predetermined depth along the thickness direction of the induction heating plate (192).

2. The induction heating device of claim 1, wherein the major surface of the at least one induction heating plate (192) is disposed to face the electrode assembly to be induction-heated.

3. The induction heating device of claim 1 or 2, wherein the first part (191a) and the second part (191b) of the induction heating coil (191) run parallel with the major surface of the induction heating plate (192).

4. The induction heating device of any one of the preceding claims,
wherein the at least one induction heating plate (192) comprises:
a first induction heating plate (192b) configured to have the electrode assembly placed thereon; and
a second induction heating plate (192a) disposed opposite to the first induction heating plate (192b) such that the electrode assembly can be interposed between the first and the second induction heating plate (192b, 192a).

5. The induction heating device of any one of the preceding claims, wherein the first predetermined depth and the second predetermined depth are different, and the induction heating coil (191) further comprises a third part (191c) connecting the first and the second part (191a, 191b).

6. The induction heating device of any one of claims 1 to 4, wherein the first and the second predetermined depth are equal.

7. The induction heating device of any one of the preceding claims, wherein the second part (191b) of the induction heating coil (191) is arranged to, when viewed in the thickness direction perpendicular to the major surface of the at least one induction heating plate (192), tangentially meet a radially outward curve of the first part (191a) of the induction heating coil (191).

8. The induction heating device of any one of the preceding claims, wherein when viewed in the thickness direction perpendicular to the major surface of the at least one induction heating plate (192), the second part (191b) of the induction heating coil (191) surrounds the first part (191a) of the induction heating coil (191).

9. The induction heating device of any one of the preceding claims, wherein when viewed in the thickness direction perpendicular to the major surface of the at least one induction heating plate (192), the induction heating coil (191) has at least one closed loop.

10. The induction heating device of any one of the preceding claims, wherein the at least one induction heating plate (192) comprises a non-conductive material.

11. The induction heating device of any one of the preceding claims, wherein a radially outward curve of the first part (191a) of the induction heating coil (191) has a semi-elliptical shape,
wherein the semi-elliptical shape has a long radius in the width direction of the induction heating plate (192) and a short radius in the longitudinal direction of the induction heating plate (192),
wherein the long radius is 50 mm or longer and 80 mm or shorter, and
wherein the short radius is 10 mm or longer and 40 mm or shorter.

12. The induction heating device of claim 11, wherein the radially outward curve periodically repeats along the longitudinal direction of the induction heating plate (192).

13. The induction heating device of claim 12, wherein the repeating period is 10 mm or greater and 30 mm or less.

14. A method for manufacturing an electrode assembly comprising a first electrode (11), a separator (14), and a second electrode (12), the method comprising:
stacking a stack (S) comprising the first electrode (11), the separator (14), and the second electrode (12) on a stack table (110);
performing induction heating by inductively heating the stack (S) with the induction heating device of any one of the preceding claims; and
heating and pressing the inductively heated stack (S).

15. An electrode assembly manufacturing apparatus for manufacturing an electrode assembly comprising a first electrode (11), a separator (14), and a second electrode (12), the electrode assembly manufacturing apparatus comprising:
a stack table (110) configured to have the first electrode (11), the separator (14), and the second electrode (12) stacked thereon;
a heating and pressing unit (180) configured to heat and press the stack (S); and
an induction heating unit (190) including the induction heating device of any one of claims 1 to 13,
wherein the induction heating unit (190) is configured to inductively heat the stack (S) before heating and pressing the stack (S) by the heating and pressing unit (180).

## Patentansprüche

1. Induktionsheizeinrichtung zur Verwendung bei der Herstellung einer Elektrodenanordnung, umfassend:
zumindest eine Induktionsheizplatte (192) mit einer Dicke, deren Hauptoberfläche entlang ihrer Länge und Breite ausgebildet ist, wobei die zumindest eine Induktionsheizplatte (192) dazu eingerichtet ist, dass sie ein Induktionsheizen an einer Elektrodenanordnung durchführt, die eine positive Elektrode, eine negative Elektrode und einen Separator, der zwischen der positiven Elektrode und der negativen Elektrode angeordnet ist, beinhaltet; und
eine Induktionsheizspule (191), die in der Induktionsheizplatte (192) eingebaut ist,
**dadurch gekennzeichnet, dass** die Induktionsheizspule (191) umfasst:
einen ersten Teil (191a), der sich in einer ersten vorbestimmten Tiefe entlang der Dickenrichtung der Induktionsheizplatte (192) erstreckt und dabei ein mäanderförmiges Serpentinenmuster bildet, und
einen zweiten Teil (191b), der sich entlang eines Umfangs der Induktionsheizplatte (192) in einer zweiten vorbestimmten Tiefe entlang der Dickenrichtung der Induktionsheizplatte (192) erstreckt.

2. Induktionsheizeinrichtung nach Anspruch 1, wobei die Hauptoberfläche der zumindest einen Induktionsheizplatte (192) so angeordnet ist, dass sie der durch Induktion zu erhitzenden Elektrodenanordnung zugewandt ist.

3. Induktionsheizeinrichtung nach Anspruch 1 oder 2, wobei der erste Teil (191a) und der zweite Teil (191b) der Induktionsheizspule (191) parallel zu der Hauptoberfläche der Induktionsheizplatte (192) verlaufen.

4. Induktionsheizeinrichtung nach einem der vorangehenden Ansprüche,
wobei die zumindest eine Induktionsheizplatte (192) umfasst:
eine erste Induktionsheizplatte (192b), die so konfiguriert ist, dass die Elektrodenanordnung darauf platziert werden kann; und
eine zweite Induktionsheizplatte (192a), die gegenüber der ersten Induktionsheizplatte (192b) so angeordnet ist, dass die Elektrodenanordnung zwischen der ersten und der zweiten Induktionsheizplatte (192b, 192a) angeordnet werden kann.

5. Induktionsheizeinrichtung nach einem der vorangehenden Ansprüche, wobei die erste vorbestimmte Tiefe und die zweite vorbestimmte Tiefe unterschiedlich sind und die Induktionsheizspule (191) weiterhin einen dritten Teil (191c) umfasst, der den ersten und den zweiten Teil (191a, 191b) verbindet.

6. Induktionsheizeinrichtung nach einem der Ansprüche 1 bis 4, wobei die erste und die zweite vorbestimmte Tiefe gleich sind.

7. Induktionsheizeinrichtung nach einem der vorangehenden Ansprüche, wobei der zweite Teil (191b) der Induktionsheizspule (191) so angeordnet ist, dass er bei Betrachtung in der Dickenrichtung senkrecht zu der Hauptoberfläche der zumindest einen Induktionsheizplatte (192) tangential auf eine radial nach außen gerichtete Krümmung des ersten Teils (191a) der Induktionsheizspule (191) trifft.

8. Induktionsheizeinrichtung nach einem der vorangehenden Ansprüche, wobei bei Betrachtung in der Dickenrichtung senkrecht zu der Hauptoberfläche der zumindest einen Induktionsheizplatte (192) der zweite Teil (191b) der Induktionsheizspule (191) den ersten Teil (191a) der Induktionsheizspule (191) umgibt.

9. Induktionsheizeinrichtung nach einem der vorangehenden Ansprüche, wobei bei Betrachtung in der Dickenrichtung senkrecht zu der Hauptoberfläche der zumindest einen Induktionsheizplatte (192) die Induktionsheizspule (191) zumindest eine geschlossene Schleife aufweist.

10. Induktionsheizeinrichtung nach einem der vorangehenden Ansprüche, wobei die zumindest eine Induktionsheizplatte (192) ein nichtleitendes Material umfasst.

11. Induktionsheizeinrichtung nach einem der vorangehenden Ansprüche, wobei eine radial nach außen gerichtete Krümmung des ersten Teils (191a) der Induktionsheizspule (191) eine halbelliptische Form aufweist,
wobei die halbelliptische Form einen langen Radius in der Breitenrichtung der Induktionsheizplatte (192) und einen kurzen Radius in der Längsrichtung der Induktionsheizplatte (192) aufweist,
wobei der lange Radius 50 mm oder länger und 80 mm oder kürzer ist, und wobei der kurze Radius 10 mm oder länger und 40 mm oder kürzer ist.

12. Induktionsheizeinrichtung nach Anspruch 11, wobei sich die radial nach außen gerichtete Krümmung entlang der Längsrichtung der Induktionsheizplatte (192) periodisch wiederholt.

13. Induktionsheizeinrichtung nach Anspruch 12, wobei die sich wiederholende Periode 10 mm oder größer und 30 mm oder kleiner ist.

14. Verfahren zur Herstellung einer Elektrodenanordnung, die eine erste Elektrode (11), einen Separator (14) und eine zweite Elektrode (12) umfasst, wobei das Verfahren umfasst:
Stapeln eines Stapels (S), der die erste Elektrode (11), den Separator (14) und die zweite Elektrode (12) umfasst, auf einem Stapeltisch (110);
Durchführen einer Induktionserhitzung durch induktives Erhitzen des Stapels (S) mit der Induktionsheizeinrichtung nach einem der vorangehenden Ansprüche; und
Erhitzen und Pressen des induktiv erhitzten Stapels (S).

15. Vorrichtung zur Herstellung einer Elektrodenanordnung zur Herstellung einer Elektrodenanordnung, die eine erste Elektrode (11), einen Separator (14) und eine zweite Elektrode (12) umfasst, wobei die Vorrichtung zur Herstellung einer Elektrodenanordnung umfasst:
einen Stapeltisch (110), der so konfiguriert ist, dass die erste Elektrode (11), der Separator (14) und die zweite Elektrode (12) darauf gestapelt sind;
eine Heiz- und Presseinheit (180), die so konfiguriert ist, dass sie den Stapel (S) erhitzt und presst; und
eine Induktionsheizeinheit (190), die die Induktionsheizeinrichtung nach einem der Ansprüche 1 bis 13 beinhaltet,
wobei die Induktionsheizeinheit (190) so konfiguriert ist, dass sie den Stapel (S) vor dem Erhitzen und Pressen des Stapels (S) durch die Heiz- und Presseinheit (180) induktiv erhitzt.

## Revendications

1. Dispositif de chauffage à induction utilisé pour la fabrication d'un ensemble d'électrodes, comprenant :
au moins une plaque chauffante à induction (192) ayant une épaisseur, dont la surface principale est formée par sa longueur et sa largeur, ladite plaque chauffante à induction (192) étant adaptée pour exécuter un chauffage à induction sur un ensemble d'électrodes comprenant une électrode positive, une électrode négative et un séparateur disposé entre l'électrode positive et l'électrode négative ; et
un serpentin de chauffage à induction (191) incorporé dans la plaque chauffante à induction (192),
**caractérisé en ce que**
le serpentin de chauffage à induction (191) comprend :
une première partie (191a) s'étendant sur une première profondeur prédéterminée dans le sens de l'épaisseur de la plaque chauffante à induction (192), en formant un motif serpentin sinueux, et
une deuxième partie (191b) s'étendant sur la périphérie de la plaque chauffante à induction (192) sur une deuxième profondeur prédéterminée dans le sens de l'épaisseur de la plaque chauffante à induction (192).

2. Dispositif de chauffage à induction selon la revendication 1, où la surface principale de ladite au moins une plaque chauffante à induction (192) est disposée face à l'ensemble d'électrodes à chauffer par induction.

3. Dispositif de chauffage à induction selon la revendication 1 ou la revendication 2, où la première partie (191a) et la deuxième partie (191b) du serpentin de chauffage à induction (191) s'étendent parallèlement à la surface principale de la plaque chauffante à induction (192).

4. Dispositif de chauffage à induction selon l'une des revendications précédentes,
où la plaque chauffante à induction (192) comprend :
une première plaque chauffante à induction (192b) prévue de sorte que l'ensemble d'électrodes soit placé sur celle-ci ; et
une deuxième plaque chauffante à induction (192a) opposée à la première plaque chauffante à induction (192b), de sorte que l'ensemble d'électrodes puisse être intercalé entre la première et la deuxième plaques chauffante à induction (192b, 192a).

5. Dispositif de chauffage à induction selon l'une des revendications précédentes, où la première profondeur prédéterminée et la deuxième profondeur prédéterminée sont différentes, et où le serpentin de chauffage à induction (191) comprend en outre une troisième partie (191c) reliant la première à la deuxième partie (191a, 191b).

6. Dispositif de chauffage à induction selon l'une des revendications 1 à 4, où la première et la deuxième profondeurs prédéterminées sont égales.

7. Dispositif de chauffage à induction selon l'une des revendications précédentes, où, vue dans le sens de l'épaisseur perpendiculairement à la surface principale de la plaque chauffante à induction (192), la deuxième partie (191b) du serpentin de chauffage à induction (191) est disposée de manière à être incidente tangentiellement à une courbe radialement extérieure de la première partie (191a) du serpentin de chauffage à induction (191).

8. Dispositif de chauffage à induction selon l'une des revendications précédentes, où, vue dans le sens de l'épaisseur perpendiculairement à la surface principale de ladite au moins une plaque chauffante à induction (192), la deuxième partie (191b) du serpentin de chauffage à induction (191) entoure la première partie (191a) du serpentin de chauffage à induction (191).

9. Dispositif de chauffage à induction selon l'une des revendications précédentes, où, vu dans le sens de l'épaisseur perpendiculairement à la surface principale de ladite au moins une plaque chauffante à induction (192), le serpentin de chauffage à induction (191) présente au moins une boucle fermée.

10. Dispositif de chauffage à induction selon l'une des revendications précédentes, où ladite au moins une plaque chauffante à induction (192) comprend un matériau non conducteur.

11. Dispositif de chauffage à induction selon l'une des revendications précédentes, où une courbe radialement extérieure à la première partie (191a) du serpentin de chauffage à induction (191) a une forme semi-elliptique,
où la forme semi-elliptique présente un rayon long dans le sens de la largeur de la plaque chauffante à induction (192) et un rayon court dans le sens de la longueur de la plaque chauffante à induction (192),
où le rayon long est compris entre 50 mm et 80 mm, et
où le rayon court est compris entre 10 mm et 40 mm.

12. Dispositif de chauffage à induction selon la revendication 11, où la courbe radialement extérieure est répétée périodiquement dans le sens de la longueur de la plaque de chauffage à induction (192).

13. Dispositif de chauffage à induction selon la revendication 12, où la période de répétition est comprise entre 10 mm et 30 mm.

14. Procédé de fabrication d'un ensemble d'électrodes comprenant une première électrode (11), un séparateur (14) et une deuxième électrode (12), ledit procédé comprenant :
la formation d'une pile (S) comprenant la première électrode (11), le séparateur (14) et la deuxième électrode (12) sur une table d'empilement (110) ;
l'exécution d'un chauffage à induction en chauffant par induction la pile (S) avec le dispositif de chauffage à induction selon l'une des revendications précédentes ; et
le chauffage et la compression de la pile (S) chauffée par induction.

15. Dispositif de fabrication d'ensembles d'électrodes, pour la fabrication d'un ensemble d'électrodes comprenant une première électrode (11), un séparateur (14) et une deuxième électrode (12), ledit dispositif de fabrication d'ensembles d'électrodes comprenant :
une table d'empilement (110) prévue pour empiler la première électrode (11), le séparateur (14) et la deuxième électrode (12) ;
une unité de chauffage et de compression (180) prévue pour chauffer et comprimer la pile (S) ; et
une unité de chauffage à induction (190) comprenant le dispositif de chauffage à induction selon l'une des revendications 1 à 13,
où l'unité de chauffage à induction (190) est prévue pour chauffer par induction la pile (S) avant chauffage et compression de la pile (S) par l'unité de chauffage et de compression (180).
